Europäisches Patentamt

European Patent Office

Office européen des brevets

(19)

(11) Publication number: **0 080 323**
**B1**

(12) **EUROPEAN PATENT SPECIFICATION**

(45) Date of publication of patent specification: **11.06.86**

(51) Int. Cl.⁴: **B 29 C 55/12**

(21) Application number: **82306109.8**

(22) Date of filing: **17.11.82**

(54) A process and apparatus for producing a biaxially oriented acrylonitrile polymer film.

(30) Priority: **18.11.81 US 322359**

(43) Date of publication of application:
**01.06.83 Bulletin 83/22**

(45) Publication of the grant of the patent:
**11.06.86 Bulletin 86/24**

(84) Designated Contracting States:
**BE DE FR GB IT NL**

(56) References cited:
**EP-A-0 018 715**
**DE-A-2 710 467**
**DE-B-1 504 938**
**DE-B-2 542 507**
**DE-C-1 007 052**
**US-A-3 611 479**
**US-A-4 066 731**
**US-A-4 124 677**

(73) Proprietor: **MOBIL OIL CORPORATION**
**150 East 42nd Street**
**New York New York 10017 (US)**

(72) Inventor: **Hungerford, Gordon Parry**
**2210 Creek Road**
**Palmyra New York 14522 (US)**

(74) Representative: **West, Alan Harry et al**
**Mobil Court 3 Clements Inn**
**London WC2A 2EB (GB)**

Courier Press, Leamington Spa, England.

## Description

This invention relates to a process and apparatus for producing a biaxially oriented acrylonitrile polymer film.

Polyacrylonitrile has been known and available since the late 1940's. This polymer cannot be melted without decomposing and therefore films cannot be made by conventional hot melt extrusion techniques. A successful technique for forming polyacrylonitrile films is described in U.S. Patent 4,066,731. Basically this process involves (a) forming a concentrated solution of an acrylonitrile polymer in a water-soluble solvent, (b) applying the solution to a film supporting cool surface, (c) contacting the resultant film with an aqueous medium substantially to remove and replace with water the solvent in the film, and (d) recovering as the resultant film a biaxially orientable film composed of a polyacrylonitrile aquagel containing from about 20 to about 75 percent by weight water.

With this type of biaxially orientable film, difficulty has always been experienced in obtaining a film of uniform gauge across its width. Typically, the transverse thickness profile is somewhat U-shaped, with the center region being fairly uniform, but with the outermost portions a few inches in from the edges having a thickness perhaps 25% higher than that in the central region.

It is an object of the present invention to provide a process for making oriented films of polymeric acrylonitrile having a reduced thickness variation in the transverse direction.

Accordingly, the invention resides in one aspect in a process for producing biaxially oriented acrylonitrile polymer film comprising the steps of stretching a strip of an aquagel film of the polymer in the longitudinal direction of the strip, stretching the aquagel film strip in the transverse direction and then drying the resultant oriented strip to remove water therefrom, characterized in that, prior to transverse stretching, the aquagel film strip is treated selectively to alter across the width of the strip the water content of the film and thereby alter the resistance of the strip to transverse stretching, thereby to permit transverse stretching to a substantially uniform thickness.

In a further aspect, the invention resides in apparatus for producing biaxially oriented acrylonitrile polymer film of substantially constant gauge profile across its width comprising means for uniformly machine direction orienting an aquagel film strip of said polymer; characterized by means for substracting water from the central region and/or adding water to the edge regions of said strip after machine direction orientation of the strip; means for receiving and transversely stretching the machine direction oriented film, said means having edge handling means for holding the film during stretching; and means for removing water from the biaxially oriented film while it is held by said edge handling means.

The film feedstock for use in the present invention can be derived from continuous film casting or from extruding equipment. Flat film may be solvent cast according to the process of U.S. Patent No. 4,066,731 wherein acrylonitrile homopolymer or interpolymer is cast onto a rotating drum from a sheeting die and coagulated as a self-supporting film. The organic solvent for the polyacrylonitrile, such as dimethylsulfoxide, is then replaced by washing in a water bath to obtain an aquagel film containing up to 75% water. This water is integrally bound in the molecular interstices of the polymer or dispersed in the orientable polymeric matrix. A tubular polyacrylonitrile (PAN) film can be extruded and water coagulated, if necessary, according to the teachings of U.S. Patent No. 4,144,299, and the unoriented film slit to produce a flat strip. Aqueous PAN film can also be made by extrusion of a high temperature polymer hydrate in a known manner.

Acrylonitrile polymers containing at least 5% $H_2O$, preferably aquagels containing about 40 to 60% $H_2O$, define suitable film feedstocks. In addition, this process is especially valuable for treating non-thermoplastic PAN homopolymer, such as duPont type A resin. Other suitable polymers include acrylonitrile copolymers and interpolymers, preferably containing at least 80% acrylonitrile repeating units, with, for example, hydrophilic ethylenically-unsaturated monomers, such as acrylic acids and esters.

The invention will now be more particularly described with reference to the accompanying drawings, wherein:—

Figure 1 is a schematic side view of apparatus for producing and effecting machine direction orientation of an aquagel film strip; and

Figure 2 is a schematic side view of apparatus for controlling the water content of the aquagel film strip prior to transverse orientation, effecting the transverse orientation and subsequently drying of the film.

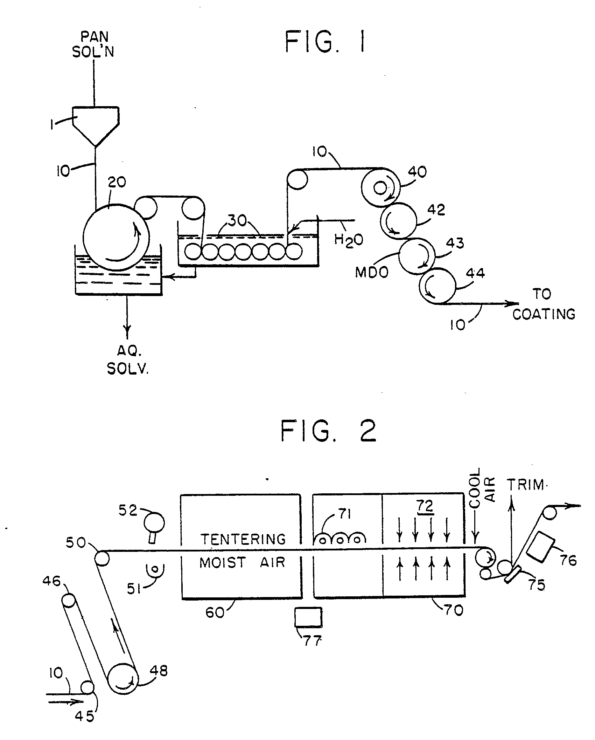

Referring to Figure 1, a continuous production line is shown for manufacturing PAN aquagel film. Thus, hot polyacrylonitrile-dimethylsulfoxide solution is fed, under pressure, to a sheeting die 1, which extrudes a thin film of polymer solution onto a cold drum surface 20. After contacting an aqueous medium, the resultant self-supporting aquagel film is stripped from the drum 20 and traverses a counter-current aqueous bath 30 wherein the organic solvent is removed and replaced by water, thereby forming the aquagel. The film 10 then passes through a machine direction orienter (MDO) 40 comprising a first heated roll maintained at about 75°C and thereafter a series of orienting rolls 42, 43 and 44, which are maintained at a sufficient differential speed to longitudinally stretch the web about 2 to 3 times thereby providing a uniaxially oriented aquagel film. The faster rolls are kept at about 50°C. Thereafter, the film is transferred to the subsequent treatment sections shown in Figure 2.

Referring to Figure 2, the uniaxially oriented aquagel film 10 is passed over a series of rolls 45, 46 and 48 which provide adequate tension prior to entering tentering unit 60. Roller guide 50 positions the uniaxially oriented film for treatment prior to entering the tentering unit 60.

Prior to entering tentering unit 60, the film receives energy from a heating source 51 which is positioned to direct its heat to a central, longitudinal region of the film. This heating means can be a hot-air gun or a radiant heater and is arranged to be capable of directing energy to any defined longitudinal region of the moving film. While Figure 2 shows heating means 51 on only one side of the film, it is to be understood that the heating means could be on the other side, or on both sides, of the film. Also located before the entry point to the tentering unit is a water application means 52 designed preferably to supply water to narrow longitudinal regions of the film adjacent the outer edges of the film. The water application means 52 is designed to operate independently of, or in combination with, the heating means 51. As with the heating means, it is to be understood that the water application means 52, although shown on only one side of the film, can be located on the opposite side or on both sides, of the film.

As the film progresses from the point of selective drying and/or selective wetting, it passes through a transverse direction orientation (TDO) unit 60.

The transverse direction orientation step is usually effected by attaching edge clips to the film and progressively stretching the film perpendicular to its machine direction travel. In so doing, the edge portions in the clips become damaged and, in any event, are thicker than the adjoining film and are ordinarily trimmed from the finished product. In the TDO unit, the film is preferably contacted with moist, hot gas, e.g. air, to prevent excessive water loss. Means for impinging hot, water-saturated air or the like at high velocity can be provided in a standard tentering apparatus, such as that disclosed in U.S. Patent No. 3,611,479. TD stretch ratios of 2:1 to 4:1 or higher may be employed, with 3:1 being employed for typical PAN aquagel film.

The biaxially-oriented film is dried in a drier unit 70 under constraint to remove water and other volatile materials which may be present in the film. These other materials may be residual organic solvent or monomer, from the film casting operation, or excess plasticizing agent.

As the film passes through the drier unit 70, it receives energy from a bank of radiant heaters 71 and thereafter is completely dried in oven section 72 where hot air, at about 200°C, is directed towards the film at high velocity. Thereafter the film is reduced to handling temperature by a stream of cool air at the exit end of drier 70 and trimmed by two edge slitting blades 75 to remove unstretched edge portions. The biaxially oriented film may then be wound onto a spool for storage or further processed by additional steps or taken directly to a fabrication line.

While not shown in the system illustrated in Figures 1 and 2 it is to be understood that at a point after machine direction orientation the aquagel film can be directed into a dip tank containing water soluble materials calculated to enhance the physical characteristics of the final film. Such a dip tank, for example, could contain an aqueous bath of triethylene glycol in order to take advantage of the plasticizing affect of the glycol on the PAN. When such a dip tank is employed, the heating means 51 may be positioned either at a point where the film enters the dip tank or, as shown in Figure 2, at a point adjacent to the entrance to the tentering unit. It will become clear below why the location of the heater can be either before or after such a dip tank.

Apparatus for monitoring the gauge thickness can be positioned at an appropriate point in the system, for example at any convenient location beyond drier unit 70. Such a device can be, for example, a beta ray thickness gauge 76, shown in Figure 2 located at a point after edge slitters 75. A control unit 77 can be operatively responsive to measuring device 76 so that, as the measuring device senses deviations from a predetermined thickness profile specification, the control unit 77 causes operation of either heating unit 51 and/or water applicator unit 52 to permit a change in aquagel character so that the film dimensions will return to within predetermined specifications.

The uniaxially oriented aquagel film is found to be surprisingly sensitive to the selective drying and/or wetting effected by the means 51 and/or 52. Thus, in one practical embodiment, a 13 inch (33 cm) wide aquagel film travelling at a linear speed of 30 feet (914 cm), was treated with a drier in the form of a resistance heating element equipped with a blower which had a 2 inch (5.1 cm) diameter exit nozzle positioned adjacent the central region of the film approximately 18 inches (46 cm) before the entrance to the tentering unit and which directed a hot air stream at 100—600°C onto the film. By monitoring the output of the gauge measurement means it was found that application of the hot air stream resulted in an immediate change in the profile of the film so that the profile became significantly more uniform than in the absence of the drying treatment.

While this result is not completely understood and is unexpected because of the close proximity of the drying means to the entrance point of the tentering unit, it is believed that even a comparatively slight alteration in the character of the aquagel in the center region of the film introduces resistance to stretching in this broad central region. The result is, the outer regions of the film, which tended to remain thicker than the center, now respond to the tentering forces so as to approach a gauge equal to the center of the aquagel film. Even in cases where the drying means 51 was positioned at a point between roll 44 of Figure 1 and roll 45 of Figure 2, and between roll 44 and a dip tank utilized to introduce modifying materials, e.g., a plasticizing agent, such as triethylene glycol, a moderate amount of drying in the central region of the aquagel film was still effective in overcoming the tendency of the outer regions of the aquagel film to be non-uniform. Again this was unexpected because the heating unit in this instance was placed at a point prior to the aquagel film entering an aqueous solution of a plasticizing agent. It would have been expected that any alteration in the aquagel system in the center of the film by the heating device, e.g. minor loss of water, would have been returned to its preheated state after entrance into an aqueous system. It was found, however, that the same stretch-resistance effect in the center region of the film was experienced during the tentering process so that the outer regions of the film were permitted to respond to the tentering forces with the result being uniform thickness at the outboard regions of the aquagel film. In other words, it would have been thought that modest drying accomplished upstream of an aqueous dip tank might have been immediately reversed by immediate water re-absorption to equilibrium in the dip tank since the "dried" portions still contained considerable water, but such, evidently was not the case. It is believed that as a result of the moderate heating, a partial "drying" must collapse, or partially collapse the aquagel irreversibly thereby reducing the reintroduction of water into the sheet in the central region as it passes through the dip tank. This would account for the greater resistance to stretching in the central region than in the balance in the sheet.

As an alternative to the drying process described above, control of the aquagel character across the width of the film can be effected by applying water or an aqueous solution to the outer regions of the aquagel in order to increase the plasticization of these regions and thus, decrease resistance to stretching. In addition, both techniques can be carried out simultaneously or alternatively as required in automatic response to information provided by a measuring device monitoring the profile dimensions of the finished film. Appropriate control means can be interposed between the measuring device and the heating and aqueous solution application devices so as to cause them to respond when needed.

The following examples illustrate the effect of the application of an aqueous surface treatment and/or heating treatment on the surface of the aquagel film in order to improve gauge uniformity of the finished film.

### Example 1

A sheet of polyacrylonitrile homopolymer aquagel film was made according to U.S. Patent No. 4,066,731. This sheet weighed from 140 mg/$in^2$ to 250 mg/$in^2$ (22 to 39 mg/$cm^2$) and contained about 45—50% water. It was longitudinally stretched by a factor of two on a machine direction orienter with a first heated roll (75°C) and cooler speed differential rolls (50°C). The uniaxially oriented wet film had a width of 13 inch (33 cm) and was then fed to the tentering apparatus at a linear speed of about 9 metres per minute. The dried biaxially oriented film emerging from drier unit 70 was approximately 40 inch (102 cm) wide. The measuring device, for example, a beta ray thickness gauge, showed that the central 24 inch (61 cm) of the film was comparatively uniform with the two outer 8 inch (20 cm) regions being 0 to 0.2 mils (0 to 0.05 mm) thicker than the center region. While monitoring the gauge profile of the film, the water application device 52 was activated so as to apply a constant drip of water approximately one inch (2.5 cm) wide on both sides of the outer regions of the film adjacent to the tentering clips. It was observed subsequently that this one inch (2.5 cm) region became approximately 3 inch (7.6 cm) wide after transverse stretching. The point of application of the water was approximately 18 inch (46 cm) in advance of the entrance to the tentering unit. In spite of the close proximity of the application of the water to the tentering apparatus, the outer regions of the dried film were observed substantially to approach the gauge of the central region of the finished film.

It appears that the more water that is applied to the outer region of the film the more this region of the film becomes plasticized and the more it thins during stretching. It also appears that the water diffuses very rapidly into the sheet since the sheet travels only a short distance before transverse stretching is begun.

### Example 2

The process of Example 1 was repeated except the water application device 52 was replaced by a heater 51 in the form of a commercial "heat gun" (HEAT BLO-GUN Model 1000X, 115 volt, 20 amp., 750—1000°F (399—538°C) at 35 CFM, 2 inch (5.1 cm) diameter nozzle) which was positioned about 18 inch (46 cm) from the entrance to the tentering apparatus to direct a stream of hot air onto the underside of the film along the center line of the film.

As in Example 1, prior to activation of heater unit 51, the beta ray thickness gauge indicated a somewhat U-shaped profile in the emerging dried film. It showed a variation from the center region to the outer regions of approximately 0.25 mils (0.06mm). Heater unit 51 was activated and adjusted by monitoring the thickness gauge until the thickness gauge was substantially uniform across the entire width of the finished sheet.

Although the stretching of polymeric film in a tenter frame is described in DE—A1—2,710,467, that document teaches heating the edges of the film near the tentering clips to overcome the cooling or heat sink tendencies of the tentering clips. That document does not describe the peculiar problems presented in producing biaxially oriented acrylonitrile polymer film from an aquagel film and which the present invention seeks to overcome.

## Claims

1. A process for producing biaxially oriented acrylonitrile polymer film comprising the steps of stretching a strip of an aquagel film of the polymer in the longitudinal direction of the strip, stretching the aquagel film strip in the transverse direction and then drying the resultant oriented strip to remove water therefrom, characterized in that, prior to transverse stretching, the aquagel film strip is treated selectively to alter across the width of the strip the water content of the film and thereby after the resistance of the strip to transverse stretching, thereby to permit transverse stretching to a substantially uniform thickness.

2. A process as claimed in Claim 1 including treating the aquagel film strip prior to transversely stretching said strip to provide a relatively lower water content at a central longitudinal region of the strip and a relatively higher water content at outer longitudinal regions of the strip.

3. A process as claimed in Claim 2 wherein said lower water content results from subjecting said central region to a drying environment sufficient to effect a water decrease in this region.

4. A process as claimed in Claim 2 or Claim 3 wherein said higher water content results from adding water to the outer longitudinal regions of said strip.

5. A process as claimed in any preceding claim and comprising the additional steps of continuously monitoring the gauge profile of the dried, oriented strip and treating the aquagel film in response to variations in said gauge profile from a predetermined specification.

6. A process as claimed in any preceding claim wherein the aquagel film strip is produced by continuously coating a solution of the acrylonitrile polymer in a water-soluble solvent and contacting the cast film with an aqueous medium to replace the solvent in the film with water.

7. Apparatus for producing biaxially oriented acrylonitrile polymer film of substantially constant gauge profile across its width comprising means (40) for uniformly machine direction orienting an aquagel film strip (10) of said polymer; characterized by means (51, 52) for substracting water from the central region and/or adding water to the edge regions of said strip after machine direction orientation of the strip; means (60) for receiving and transversely stretching the machine direction oriented film, said means having edge handling means for holding the film during stretching; and means (70) for removing water from the biaxially oriented film while it is held by said edge handling means.

8. Apparatus as claimed in Claim 7 and further comprising measuring means (76) for continuously measuring the gauge profile of the dried, biaxially oriented film across the width thereof; and control means (77) in association with said measuring means and responsive to deviations from a predetermined gauge profile specification to cause operation of said means (51) for substracting water from and/or means (52) for adding water to specific longitudinal regions of said film strip.

## Patentansprüche

1. Verfahren zur Herstellung einer biaxial orientierten Polyacrylnitrilfolie, welches die Stufen des Dehnens eines Bandes einer Aquagelfolie des Polymers in Längscrichtung des Bandes, das Dehnen des Aquagelfolienbandes in Querrichtung und danach das Trocknen des resultierenden orientierten Bandes, um das Wasser daraus zu entfernen, umfaßt, dadurch gekennzeichnet, daß vor der Querdehnung das Aquagelfolienband selektiv behandelt wird, um entlang der Breite des Bandes den Wassergehalt der Folie zu verändern und dadurch die Beständigkeit des Bandes gegenüber Querdehnung zu verändern, um dadurch eine Querdehnung auf eine im wesentlichen einheitliche Dicke zu ermöglichen.

2. Verfahren nach Anspruch 1, welches die Behandlung des Aquagelfoliebandes vor der Querdehnung des Bandes umfaßt, um einen relativ geringeren Wassergehalt an dem zentralen Längsbereich des Bandes und einen relativ höheren Wassergehalt an den äußeren Längsbereichen des Bandes zu schaffen.

3. Verfahren nach Anspruch 2, worin der geringere Wassergehalt daraus resultiert, daß der zentrale Bereich einer trocknenden Umgebung unterzogen wird, die ausreichend ist, um eine Wasserverringerung in diesem Bereich zu bewirken.

4. Verfahren nach Anspruch 2 oder 3, worin der höhere Wassergehalt aus der Zugabe von Wasser zu den äußeren Längsbereichen des Bandes resultiert.

5. Verfahren nach einem der vorstehenden Ansprüche, welches die zusätzlichen Stufen der kontinuierlichen Überwachung des Schichtdikkenmessers des Profils des getrockneten orientierten Bandes und die Behandlung der Aquagelfolie entsprechend den Abweichungen der Profilschichtdickensmessung von einem vorbestimmten Richtwert umfaßt.

6. Verfahren nach einem der vorstehenden Ansprüche, worin das Aquagelfolienband durch kontinuierliches Überziehen einer Lösung des Acrylonitrilpolymers in einem wasserlöslichen Lösungsmittel und in Kontaktbringen der gegossenen Folie mit einem wässrigem Medium, um das Lösungsmittel in der Folie durch Wasser auszutauschen, hergestellt wird.

7. Vorrichtung zur Herstellung eine biaxial orientierten Polyacrylnitrilfolie mit im wesentlichen konstanter Profilschichtdickenmessung entlang ihrer Breite, die eine Einrichtung (40) zur einheitlichen Orientierung in Maschinenrichtung eines Aquagelfolienbandes (10) des Polymers umfaßt, gekennzeichnet durch Einrichtungen (51, 52) zum Entfernen von Wasser aus dem zentralen Bereich und/oder Zugeben von Wasser zu den Kantenbereichen des Bandes nach der Orientierung des Bandes in Maschinenrichtung, eine Einrichtung (60) zur Aufnahme und zum Querdehnen der in Maschinenrichtung orientierten Folie, wobei diese Einrichtung Kantenhandhabungseinrichtungen zum Halten der Folie während des Dehnens umfaßt; und eine Einrichtung (70) zum Entfernen des Wasser aus der biaxial orientierten Folie während sie durch die Kantenhandhabungseinrichtung gehalten wird.

8. Vorrichtung nach Anspruch 7, die eine Meßeinrichtung (76) zum kontinuierlichen Messen der Profilschichtdicke der getrockneten biaxial orientierten Folie entlang ihrer Breite und eine Regeleinrichtung (77) in Verbindung mit der Meßeinrichtung und entsprechend den Abweichungen von einem vorbestimmten Richtwert der Profilschichtdicke umfaßt, um den Betrieb der Einrichtung (51) zur Entfernung des Wassers und/oder der Einrichtung (52) zur Zugabe von Wasser zu den spezifischen Längsbereichen des Folienbandes zu bewirken.

**Revendications**

1. Procédé pour produire une pellicule ou film de polymère d'acrylonitrile orientée ou étirée biaxialement, comprenant les étapes d'étirage d'une bande ou ruban d'un film d'aquagel du polymère dans la direction longitudinale de la bande, d'étirage de la bande de film d'aquagel dans la direction transversale et ensuite de séchage de la bande orientée résultante pour en éliminer l'eau, caractérisé en ce que, avant l'étirage transversal, la bande de film d'aquagel est traitée sélectivement pour modifier la teneur en eau du film dans la largeur de la bande et modifier ainsi la résistance de la bande à l'étirage transversal, de manière à permettre l'étirage transversal à une épaisseur sensiblement uniforme.

2. Procédé selon la revendication 1, comprenant le traitement de la bande de film d'aquagel avant l'étirage transversal de ladite bande pour produire une teneur en eau relativement plus faible dans une région longitudinale centrale de la bande et une teneur en eau relativement plus élevée dans les régions longitudinales marginales de la bande.

3. Procédé selon la revendication 2, dans lequel ladite teneur en eau plus faible s'obtient en soumettant ladite région centrale à un environnement desséchant suffisant pour effecteur une diminution de la teneur en eau dans cette région.

4. Procédé selon la revendication 2 ou 3, dans lequel ladite teneur en eau plus élevée s'obtient par addition d'eau aux régions longitudinales marginales de ladite bande.

5. Procédé selon l'une quelconque des revendications précédentes et comprenant les étapes supplémentaires de contrôle continu du profil de calibre de la bande étirée séchée et de traitement du film d'aquagel en réponse aux variations dudit profil de calibre à partir d'une spécification prédéterminée.

6. Procédé selon l'une quelconque des revendications précédentes, dans lequel la bande de film d'aquagel est produite par application continue d'une solution du polymère d'acrylonitrile dans un solvant soluble dans l'eau et mise en contact du film coulé avec un milieu aqueux pour remplacer le solvant dans le film par de l'eau.

7. Appareil pour la production d'un film de polymère d'acrylonitrile étiré biaxialement ayant un profil de calibre sensiblement constant dans sa largeur, comprenant un dispositif (40) pour étirer uniformément dans la direction machine une bande de film d'aquagel (10) dudit polymère, caractérisé par des dispositifs (51, 52) pour retirer de l'eau de la région centrale et/ou ajouter de l'eau dans les régions marginales de ladite bande après étirage de la bande dans la direction machine; un dispositif (60) pour recevoir et étirer transversalement le film étiré dans la direction machine, ledit dispositif ayant des moyens de manipulation des bords pour maintenir le film pendant l'étirage; et un dispositif (70) pour enlever de l'eau du film étiré biaxialement tandis qu'il est maintenu par lesdits moyens de manipulation des bords.

8. Appareil selon la revendication 7 et comprenant en outre un dispositif de mesure (76) pour mesurer en continu le profil de calibre du film étiré biaxialement, séché, dans sa largeur; et un dispositif de réglage (77) en association avec ledit dispositif de mesure et répondant aux écarts par rapport à une spécification prédéterminée de profil de calibre, pour provoquer le fonctionnement dudit dispositif (51) pour enlever de l'eau et/ ou ledit dispositif (52) pour ajouter de l'eau aux régions longitudinales spécifiques de ladite bande de film.

**0 080 323**

FIG. 1

FIG. 2

1